# EUROPÄISCHE PATENTANMELDUNG

(11) **EP 2 073 322 A2**
(43) Veröffentlichungstag der Anmeldung: **24.06.2009**
(21) Anmeldenummer: 08021989.2
(22) Anmeldetag: 18.12.2008
(51) Int. Cl.: H01R 24/12

(54) **Installationsanordnung**

(30) Priorität: 21.12.2007 DE 102007063586
(71) Anmelder: Merten GmbH & Co. KG, 51674 Wiehl (DE)
(72) Erfinder: Vicktorius, Richard, 50739 Köln (DE)

(57) **Zusammenfassung**

Die Erfindung betrifft eine Installationsanordnung (1) für die Gebäudesystemtechnik, bestehend aus mehreren elektrischen Geräten (2, 3, 12, 13), wobei ein erstes Gerät (2) einen Gerätesockel (6) aufweist, der ortsfest in einem Installationsgehäuse (4) befestigt ist, der an eine Netzspannung angeschlossen ist, und an dem frontseitig ein Frontelement (8) befestigt ist. Um eine Installationsanordnung (1) zu schaffen, die den Installationsaufwand verringert und eine permanente Spannungsversorgung gewährleistet, ist ein zweites Gerät (3) an dem Gerätesockel (6) des ersten Gerätes (2) angeordnet und an die Versorgungsspannung des ersten Gerätes (2) angeschlossen, wobei das zweite Gerät (3) funktional unabhängig von dem ersten Gerät (2) ist.

## Beschreibung

Die Erfindung betrifft eine Installationsanordnung für die Gebäudesystemtechnik nach dem Oberbegriff des Patentanspruches 1.

Elektrische Installationsgeräte werden im Rahmen der Gebäudesystemtechnik sowohl bei der Erstausstattung als auch im Nachrüstbereich eingesetzt. Häufig ist es wichtig, das jeweilige elektrische Installationsgerät funktional aufrüsten zu können. Aus diesem Grund hat es sich als vorteilhaft erwiesen, modulare Baugruppen zu schaffen, mit denen bei Bedarf das vorhandene Gerät ergänzt werden kann. Aus dem Stand der Technik, beispielsweise aus der EP 0 281 969 B1, ist eine netzversorgte Steckdose bekannt, bei der eine Baugruppe rückseitig befestigt werden kann, die in Form eines Überspannungsschutzes funktional auf die Steckdose einwirkt.

Neben herkömmlichen leitungsgebundenen Installationssystemen existieren Systeme bei denen Datentelegramme drahtlos mittels Funksignalen von Bedienelementen und Sensoren zur lastschaltenden Aktorik übertragen werden, die dann leitungsgebunden die jeweiligen Verbraucher mit Netzspannung versorgt. Aufgrund eingeschränkter Sendeleistung und räumlich bedingter Störungen des Funkverkehrs werden oftmals Signal verstärkende bzw. wiederholende Bauelemente sogenannte Repeater bzw. Router verwendet, um eine einwandfreie Datenübermittlung zu gewährleisten. Diese Geräte werden an exponierten Stellen positioniert und müssen aufgrund permanenter Sendebelastung mit einer zuverlässigen Spannungsversorgung ausgestattet sein. Da temporäre Energiespeicher einem hohen Wechselzyklus unterliegen, wird die Versorgung mit Netzspannung bevorzugt. Abhängig vom Montageort ist folglich eine entsprechende Erweiterung der Leitungsinstallation erforderlich.

Die Aufgabe der vorliegenden Erfindung besteht deshalb darin, die vorstehend genannten Nachteile zu beseitigen und eine Installationsanordnung zu schaffen, die den Installationsaufwand verringert und eine permanente Spannungsversorgung gewährleistet.

Gelöst wird diese Aufgabe durch die im Patentanspruch 1 angegebenen Merkmale. Vorteilhafte Ausgestaltungen ergeben sich aus den Unteransprüchen.

Die Erfindung gemäß dem Patentanspruch 1 weist den Vorteil auf, dass Installationsplätze und Versorgungsleitungen von elektrischen Geräten zusätzlich genutzt werden, um auch funktionsfremde Geräte mit Spannung zu versorgen. Bisher wurden diese Geräte an separaten Montageplätzen installiert, so dass eine zusätzliche Verlegung der Versorgungsleitungen einschließlich optisch nachteiliger Aufputzinstallationen oder aufwendiger Unterputzinstallationen erforderlich war. Durch die erfindungsgemäße Anordnung wird außerdem mit geringem Installationsaufwand eine verdeckte Installation dieser Geräte möglich. Interferenzen zwischen den Geräten entstehen nicht. Darüber hinaus wird eine permanente Spannungsversorgung ermöglicht, so dass auf temporäre Energiespeicher für die Geräte verzichtet werden kann.

Eine bevorzugte Anwendung der Erfindung ergibt sich bei der Kombination von herkömmlichen leitungsgebundenen Geräten mit drahtlos kommunizierenden, vorzugsweise auf Funk basierenden, Geräten. Derartige Geräte können, sofern sie keinen funktionsspezifischen Montageort haben, weitgehend ortsunabhängig platziert werden, wie z. B. sogenannte Repeater oder Router, die Funksignale empfangen, selektieren, verstärken und/oder weiterleiten. Ein nutzbarer Installationsplatz eines drahtgebundenen Installationsgerätes, vorzugsweise eine Steckdose, ist in der Regel in dem Aktionsradius jedes entsprechenden Funkgerätes vorhanden.

Da die zu adaptierenden Geräte funktional in sich geschlossene Baugruppen bilden, sind am Installationsgerät keine Veränderungen notwendig. In Funk basierenden Geräten wird eine eingehende Netzspannung in eine geeignete kleinere Spannung und/oder andere Energieart für die Funkbauelemente umgewandelt. Optional sind visuell oder akustisch wirkende Bauelemente beispielsweise für Zustandsmeldungen angeordnet.

Die erfindungsgemäße Anordnung kann sowohl in Aufputz- als auch in Unterputzinstallationen realisiert werden. Eine Adaption an vorhandene Installationsgeräte ist unproblematisch, da an den Anschlussklemmen ein zusätzlicher Abgriff jederzeit möglich ist.

Die Anordnung des Gerätes erfolgt in einer Ausführung rückseitig des drahtgebundenen Installationsgerätes, da hier ausreichend Montageplatz vorhanden ist. Installationstechnisch ist dabei die Verwendung einer tiefen Installationsdose vorteilhaft, da dann eine leichte Montage möglich ist.

In bevorzugt ausgebildeten Installationsgeräten ist eine platzsparende Anordnung des drahtlos arbeitenden Gerätes möglich. Dabei wird durch eine vorteilhafte Bauteilanordnung innerhalb der vorhandenen Struktur des Gerätesockels ein Aufnahmeraum geschaffen, so dass das Gerät vorzugsweise formschlüssig und flächenbündig in den Gerätesockel integriert werden kann. Es wird kein zusätzlicher Platz vor oder hinter dem Gerätesockel benötigt, um das Gerät anzuordnen. Somit wird ein universell verwendbares Installationsgerät geschaffen, das im Bedarfsfall mit einem geeigneten Gerät kombiniert werden kann. Die allgemein vorhandene Struktur von Gerätesockeln, insbesondere deren Abmessungen und deren Befestigungs- und Kontaktpunkte, bleibt unverändert erhalten.

Besonders vorteilhaft ist dabei die Ausbildung eines frontseitig zugänglichen Aufnahmeraumes innerhalb des Gerätesockels, da der Gerätesockel für die Montage dann nicht aus dem Installationsgehäuse gelöst werden muss. Lediglich das entsprechende Frontelement muss entfernt werden, um das Gerät einsetzen zu können. Es entsteht ein erheblicher Installationsvorteil. Darüber hinaus können funktionsspezifischen Frontelemente innerhalb einer Produktserie beim Austausch eines bestehenden Installationsgerätes weiter verwendet werden.

Der elektrische Anschluss des Gerätes erfolgt indirekt an der Versorgungsspannung des Installationsgerätes, vorteilhafterweise mit einer lösbaren Technik, insbesondere mittels Steckung, an die Anschlussklemmen oder Kontaktelemente des Installationsgerätes. Die Kontaktierung des Gerätes erfolgt vorteilhafterweise während der Gerätemontage selbsttätig. Die entsprechenden Kontaktelemente des Installationsgerätes und des zu adaptierenden Gerätes sind berührungsgeschützt angeordnet. Denkbar ist jedoch auch eine unlösbare Verbindung.

Eine mögliche Ausführungsform der Erfindung ergibt sich durch eine elektrische Steckdose mit einem rückseitig des Gerätesockels angeordneten und über Anschlussklemmen des Gerätesockels mit der Netzspannung versorgten Funk-Repeater.

Weitere Einzelheiten, Merkmale und Vorteile der Erfindung ergeben sich aus nachfolgender Beschreibung bevorzugter Ausführungsbeispiele anhand der Zeichnungen.

Es zeigen:

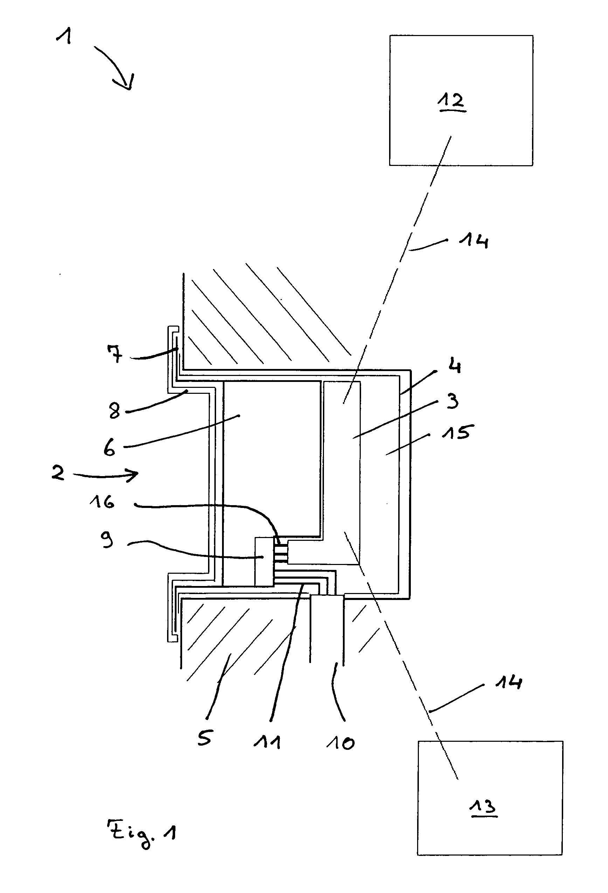

- Figur 1: schematisch eine erfindungsgemäße Installationsanordnung mit rückseitiger Geräteanordnung.
- Figur 2: ein weiteres Ausführungsbeispiel mit rückseitiger Geräteanordnung.
- Figur 3: ein weiteres Ausführungsbeispiel mit frontseitiger Geräteanordnung.

Gleiche oder gleichwirkende Bauteile sind in der nachfolgenden Beschreibung mit gleichen Bezugszeichen versehen.

Nachfolgend wird der Aufbau und die Funktionsweise der erfindungsgemäßen Installationsanordnung 1 schematisch anhand von drei Alternativen näher beschrieben. Beispielhaft ist dabei ein erstes elektrisches Gerät 2 in Form einer Steckdose dargestellt, die mit einem zweiten elektrischen Gerät 3 in Form eines Funk basierenden Repeaters bestückt ist.

Die Installationsanordnung 1 weist ein erstes elektrisches Gerät 2 auf, das in einem Installationsgehäuse 4 befestigt ist, welches ortsfest in einer Gebäudewand 5 fixiert ist. Das Gerät 2 weist einen Gerätesockel 6 auf, den außenseitig ein Tragrahmen 7 umgibt, der die Befestigung des Gerätes 2 in dem Installationsgehäuse 4 ermöglicht. Frontseitig ist ein funktionsspezifisches Frontelement 8 befestigt, das je nach Anwendung ein- oder mehrteilig sein kann. In dem Gerätesockel 6 sind Anschlussklemmen 9 und damit verbundene metallische Kontaktelemente angeordnet, in die frontseitig Steckerstifte eines nicht dargestellten Gerätesteckers gesteckt werden. Des weiteren ist in dem Gerätesockel 6 ein Erdungsbügel angeordnet, der zur frontseitigen Kontaktierung eines Erdungskontaktes des Gerätesteckers dient. Eine wandseitig verlegte Versorgungsleitung 10 versorgt das Gerät 2 mit einer Netzspannung, wobei die einzelnen Leitungen 11 lösbar in den Anschlussklemmen 9 fixiert sind.

Darüber hinaus ist ein funkbasierendes Teilsystem angeordnet, das aus verschiedenen Geräten 3, 12, 13 besteht, die mittels Funksignalen 14 Datentelegramme austauschen, wobei das Gerät 3 beispielsweise von einem Gerät 12 eingehende Datentelegramme empfängt, gegebenenfalls selektiert, verstärkt und an ein weiteres Gerät 13 sendet.

Das Gerät 3 ist in einem Freiraum 15 in dem Installationsgehäuse 4 hinter dem Gerät 2 angeordnet. Das Gerät 3 ist über Anschlusskontakte 16 lösbar mit den Anschlussklemmen 9 des Installationsgerätes 2 verbunden und somit ebenfalls an das Versorgungsnetz angeschlossen. In dem Gerät 3 sind diverse elektronische Bauteile angeordnet, mit denen eine Transformation der eingehenden Netzspannung in eine geeignete Versorgungsspannung für die Funkbauelemente realisiert wird. Das Gerät 3 fungiert als Repeater und kann innerhalb systemtechnisch bedingter Grenzen an beliebiger Stelle platziert sein. Durch die Anordnung an dem Installationsgerät 2 kann die entsprechende Leitungsinstallation und die Netzspannung mitgenutzt werden und separate Installationsarbeiten entfallen.

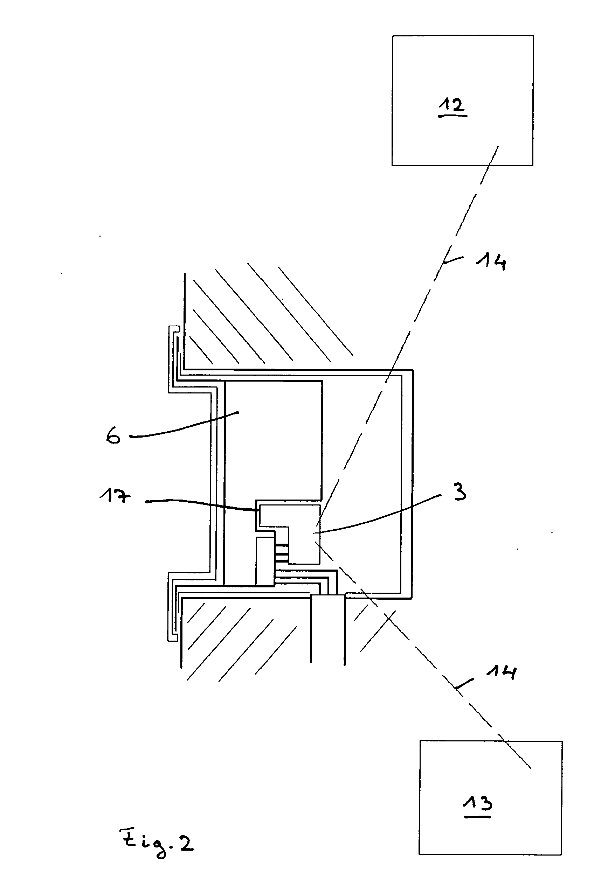

Gemäß Figur 2 ist eine vorteilhafte rückseitige Anordnung des Gerätes 3 innerhalb eines Aufnahmeraumes 17 in dem Gerätesockel 6 dargestellt.

Im unbestückten Zustand verschließt eine entfernbare Abdeckung (nicht dargestellt) diesen Aufnahmeraum 17, in den das Gerät 3 formschlüssig einsetzbar und rastend fixierbar ist. Bodenseitig sind die Anschlusskontakte 16 berührungsgeschützt aus dem Gerät 3 geführt, die mit den Anschlussklemmen 9 in dem Gerätesockel 6 elektrisch kontaktierbar sind. Für die Montage des Gerätes 3 wird das Frontelement 8 entfernt, der Gerätesockel 6 aus dem Installationsgehäuse 4 gelöst und anschließend die Abdeckung des Aufnahmeraumes 17 entfernt. Das Gerät 3 wird in den Aufnahmeraum 17 geschoben. Automatisch wird es dabei sowohl mechanisch verrastet als auch elektrisch an die Netzspannung angeschlossen. Abschließend wird der so bestückte Gerätesockel 6 wieder in dem Installationsgehäuse 4 befestigt und das Frontelement 8 montiert.

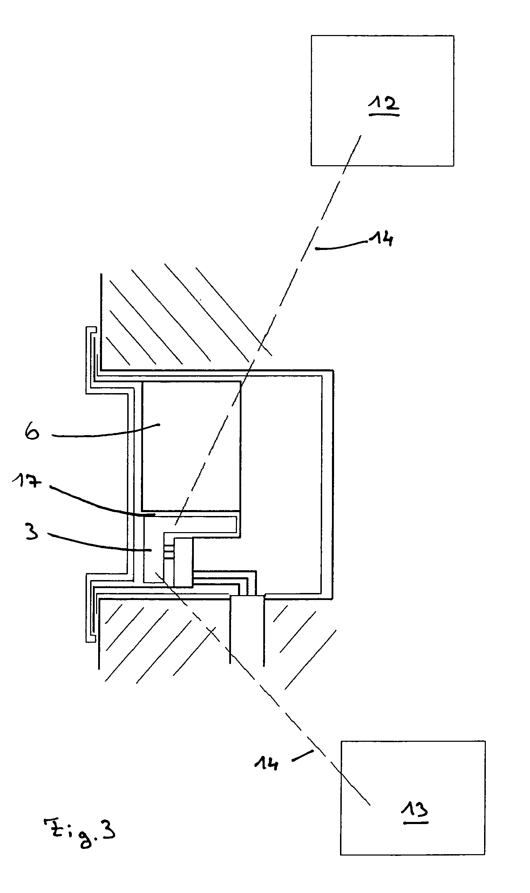

Gemäß Figur 3 ist eine vorteilhafte frontseitige Anordnung des Gerätes 3 in einem Aufnahmeraum 17 des Gerätesockels 6 dargestellt. Im unbestückten Zustand verschließt eine entfernbare Abdeckung (nicht dargestellt) diesen Aufnahmeraum 17, in den das Gerät 3 formschlüssig einsetzbar und rastend fixierbar ist. Bodenseitig sind die Anschlusskontakte 16 berührungsgeschützt aus dem Gerät 3 geführt, die mit den Anschlussklemmen 9 in dem Gerätesockel 6 elektrisch kontaktierbar sind.

Für die Montage des Gerätes 3 wird das Frontelement 8 und anschließend die Abdeckung des Aufnahmeraumes 17 entfernt. Aufgrund des Formschlusses und einer zylindrischen Raumerstreckung kann das Gerät 3 ohne Verkantungen linear bis zum Anschlag in den kreissegmentförmigen Aufnahmeraum 17 geschoben werden. Automatisch wird es dabei sowohl mechanisch verrastet als auch elektrisch an die Netzspannung angeschlossen. Oberseitig des Gerätes 3 befinden sich Leuchtelemente, um Lichtsignale gezielt an Anzeigeelemente in dem Frontelement 8 leiten zu können. Abschließend wird das Frontelement 8 wieder montiert. In diesem Ausführungsbeispiel ist weder ein Ausbau des Installationsgerätes 2 noch sind zusätzliche Anschlussarbeiten notwendig.

Die vorstehende Beschreibung des Ausführungsbeispieles dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihrer Äquivalente zu verlassen.

### Bezugszeichenliste

- 1: Installationsanordnung
- 2: Erstes Gerät
- 3: Zweites Gerät
- 4: Installationsgehäuse
- 5: Gebäudewand
- 6: Gerätesockel
- 7: Tragrahmen
- 8: Frontelement
- 9: Anschlussklemmen
- 10: Versorgungsleitung
- 11: Leitungen
- 12: Gerät
- 13: Gerät
- 14: Funksignal
- 15: Freiraum
- 16: Anschlusskontakte
- 17: Aufnahmeraum

## Patentansprüche

1. Installationsanordnung für die Gebäudesystemtechnik, bestehend aus mehreren elektrischen Geräten (2, 3, 12, 13), wobei ein erstes Gerät (2) einen Gerätesockel (6) aufweist, der ortsfest in einem Installationsgehäuse (4) befestigt ist, der an eine Netzspannung angeschlossen ist, und an dem frontseitig ein Frontelement (8) befestigt ist, und wobei ein zweites Gerät (3) an dem Gerätesockel (6) des ersten Gerätes (2) angeordnet ist und an die Versorgungsspannung des ersten Gerätes (2) angeschlossen ist und wobei das zweite Gerät (3) funktional unabhängig von dem ersten Gerät (2) ist.

2. Installationsanordnung nach Patentanspruch 1, **dadurch gekennzeichnet, dass** das zweite Gerät (3) mit weiteren Geräten (12, 13) drahtlos kommuniziert.

3. Installationsanordnung nach einem der vorhergehenden Patentansprüche, **dadurch gekennzeichnet, dass** drahtlose Signale in dem zweiten Gerät (3) empfangbar, verstärkbar und/oder weiterleitbar sind.

4. Installationsanordnung nach einem der vorhergehenden Patentansprüche, **dadurch gekennzeichnet, dass** die Übertragung der Signale (14) mittels Funkwellen erfolgt.

5. Installationsanordnung nach einem der vorhergehenden Patentansprüche, **dadurch gekennzeichnet, dass** die in dem zweiten Gerät (3) eingehende Netzspannung transformiert wird.

6. Installationsanordnung nach einem der vorhergehenden Patentansprüche, **dadurch gekennzeichnet, dass** das zweite Gerät (3) in dem Installationsgehäuse (4) angeordnet ist.

7. Installationsanordnung nach einem der vorhergehenden Patentansprüche, **dadurch gekennzeichnet, dass** das zweite Gerät (3) lösbar an dem Gerätesockel (6) des ersten Gerätes (2) angeordnet ist.

8. Installationsanordnung nach einem der vorhergehenden Patentansprüche, **dadurch gekennzeichnet, dass** das zweite Gerät (3) frontseitig oder rückseitig des Gerätesockels (6) angeordnet ist.

9. Installationsanordnung nach einem der vorhergehenden Patentansprüche, **dadurch gekennzeichnet, dass** der Gerätesockel (6) einen Aufnahmeraum (17) für ein formschlüssig einsteckbares zweites Gerät (3) aufweist.

10. Installationsanordnung nach einem der vorhergehenden Patentansprüche, **dadurch gekennzeichnet, dass** das zweite Gerät (3) frontseitig und flächenbündig in dem Aufnahmeraum (17) des Gerätesockels (6) angeordnet ist.

11. Installationsanordnung nach einem der vorhergehenden Patentansprüche, **dadurch gekennzeichnet, dass** bei der mechanischen Positionierung des zweiten Gerätes (3) an dem Gerätesockel (6) eine selbsttätige elektrische Kontaktierung erfolgt.

12. Installationsanordnung nach einem der vorhergehenden Patentansprüche, **dadurch gekennzeichnet, dass** das erste Gerät (2) als elektrische Steckdose ausgeführt ist.

13. Installationsanordnung nach einem der vorhergehenden Patentansprüche, **dadurch gekennzeichnet, dass** das zweite Gerät (3) als drahtlos kommunizierender Router oder Repeater ausgeführt ist.
